# EUROPEAN PATENT SPECIFICATION

(11) **EP 3 259 473 B1**
(45) Date of publication and mention of the grant of the patent: **08.07.2020**
(21) Application number: 16753239.9
(22) Date of filing: 09.04.2016
(51) Int. Cl.: F03D 9/17, F03D 9/25, F03D 7/04, F03D 13/25

(54) **WIND FARM WITH COMPRESSED AIR ENERGY STORAGES**
WINDPARK MIT DRUCKLUFTENERGIESPEICHERN
PARC ÉOLIEN AVEC STOCKAGE D'ÉNERGIE PAR AIR COMPRIMÉ

(43) Date of publication of application: 27.12.2017
(73) Proprietor: Umez-Eronini, Eronini, Washington, District of Columbia 20012-1224 (US)
(72) Inventor: Umez-Eronini, Eronini, Washington, District of Columbia 20012-1224 (US)
(74) Representative: Jeck, Anton
(86) International application number: PCT/US2016/026841
(87) International publication number: WO 2016/134385

(56) References cited:
- EP-A2- 2 952 736
- US-A1- 2013 134 711
- US-A1- 2014 246 232
- US-B2- 6 927 503
- US-B2- 6 927 503
- US-B2- 8 801 332

## Description

### TECHNICAL FIELD

The invention relates generally to a method and system to improve the capacity factor of energy resources characterized by distributed intermittent power sources, such as wind turbines in a wind farm, by thermally efficient energy storage in compressed air. More specifically the invention relates to distributed compressed air energy storage with a heat interchange network for high thermal efficiency.

### BACKGROUND ART

Intermittency and availability of wind and related energy resources are typically at variance with power demand resulting in under-utilization and modest intrinsic capacity factors for such power sources. The problem of intermittency and availability of some energy resources may be mitigated by incorporation of energy storage systems to accumulate energy during off-peak power demand and release the energy during peak power demand. Compressed Air Energy Storage devices store energy by using an electric motor to compress air which is then stored and later used to generate electricity by expanding the compressed air through turbines. Compressed air energy storage systems have limited environmental impact and operational constraints, are long lived, and represent mature and reliable technology with high power capture advantages over most other energy storage approaches to mitigating the intermittency and availability problem of wind resources. Conventional Compressed Air Energy Storage employing large scale underground formations for air storage can boost current capacity factors of wind turbines of on-land wind farms by almost a factor of two. Unfortunately favorable geologic resources are usually not available collocated or in close proximity with most offshore wind and some other power resources.

Although conventional Compressed Air Energy Storage systems have limited system efficiency due mostly to thermal energy losses in the compressor and expander trains which operate on different schedules, they possess very high economics of scale, and reliability that derives from use of proven conventional turbomachinery. Related technologies with potentially higher thermal system efficiencies than conventional Compressed Air Energy Storage systems, such as various "near" isothermal compressor-expander Compressed Air Energy Storage technology that utilize new compressor and expander systems (for example United States Patents Bolinger 2010: US 7802426 and Fong et al 2012: US 8182240), must undergo long and extensive development before the elements approach the functional and reliability levels of conventional Compressed Air Energy Storage components.

Conventional compressed air energy storage systems also have advantages including: the compression time can be optimized to market conditions; operational flexibility; scalability; low emission, since only supplemental heating may be needed; flexible equipment sourcing - combustion and expansion turbines and air compressors are standard industry components; lowest capital cost per kilowatt hour delivered for bulk storage, among competing technologies - pumped hydro, flywheels, batteries, super-capacitor, magnetic, thermal, etc. While batteries are also cost effective, abuse tolerant, and critical for the electrification of personal transportation systems, they lack the brute capacity required for most wind power regulation.

US 6927503 B2 and EP 2952736 A2 disclose systems comprising wind turbines and compressed air storage tanks.

It is an object of the present invention to facilitate high thermally efficient compressed air energy storage system utilizing conventional components.

### DISCLOSURE OF INVENTION

Current Compressed Air Energy Storage employing large scale underground air storage or otherwise consolidated air storage have compression chain technology that uses intercoolers and an aftercooler to reduce the temperature of the injected air thereby enhancing the compression efficiency, reducing the storage volume requirement and minimizing thermal stress on the storage volume walls. With a large number of compressor stages and intercooling the system theoretical efficiency can approach that for adiabatic compression. Conventional turbo expander chains require fuel to be combusted to heat the compressed air during expansion to improve the process capacity and efficiency. Additional approaches to improve efficiency and boost capacity include turbine blade cooling, humidification, and steam injection schemes. However both cooling of the compressed air during compression and heating it during expansion represent significant loss of energy because the heat generation and heat utilization are essentially separated in-time to off-peak hours and peak demand hours. The use of equally consolidated long-term thermal energy storage which is fraught with inefficiencies is only marginally effective in alleviating the energy loss. Also the electrical energy generation per unit of air storage capacity is dependent on the compressed air supply pressure and consolidated or underground (aquifer) air storage systems have limited pressure capacity due to physical considerations.

The present invention comprises of a method and system that retains all the proven components and relevant capacity improvement options of conventional Compressed Air Energy Storage but (1) distributes the air storage, compression and expansion to a multiplicity of storage tanks and compressor-expander trains at each wind turbine (intermittent power source) in a farm; the much reduced size turbine based storage tanks may operate at much higher pressures than is feasible with geologic formations and large consolidated storage means thus overcoming the loss of economy of scale in the distributed system, (2) includes a thermal energy interchange network linking all the turbine stations with well insulated controlled cooling and heating circuits, (3) includes distributed and central or supervisory control functions to dynamically schedule individual wind turbine power production or energy storage or compressed air power production, in concert with regular wind farm operational objectives, including optimization of system thermal efficiency and capacity factor; and (4) integrates the items 1-3 functionally and physically with the wind farm or distributed intermittent power resource.

Efficiency and capacity improvements result from the matching of heat production of the energy-storing turbines with the heat demand of the turbines producing power from stored energy. The compression and expansion phases of each turbine station is no longer directly coupled to the global off-peak and peak power demand cycle, and the conventional fuel requirement during expansion is grossly reduced or eliminated but without the attendant need for formal long-term thermal energy storage due to advanced management of the thermal energy interchanges in the heat network, The optimal scheduling of the turbines' energy storage and power production and generation phases is in addition to the other complex objectives of power and load control of the wind farm. Wind turbines are spread over a large area, and not all turbines encounter the same transient wind conditions. Moreover the layout of turbines on the farm, whether dictated by geographical features, prevailing wind direction or other factors introduce turbine aerodynamic interaction into the control mix. Separation of the compression and turbo-expander components and operations implies that the compressor size can be optimized independently of the turbo-expander design and standard production compressors may be used in the system configuration.

### BRIEF DESCRIPTION OF THE DRAWINGS

These features and advantages of the invention are made more apparent when considered in connection with the accompanying drawings conveying application of a preferred embodiment to an offshore wind farm, as an example, which is not to be considered limiting its scope to other embodiments or applications which the invention is capable of contemplating. These drawings which are not to scale or exact shape or form, omit for clarity, routine items of structure, equipment, software and hardware, including those for annunciation, sensing and control, that are obvious to one skilled in the art, while illustrating the method and system of the invention according to:
Fig. 1 is a general view of an exemplary offshore wind turbine including the tower and support;
Fig. 2 illustrates in general vertical cross-section the tower and support with the corresponding units of distributed air storage tank, compression and expansion units, and branch elements of the cooling and heating circuits; and
Fig. 3 illustrates a general plan view or layout of the wind farm with the thermal energy interchange network of insulated cooling and heating circuits interposed with the usually buried or covered electric power cables on the sea floor.

### BEST MODE FOR CARRYING OUT THE INVENTION

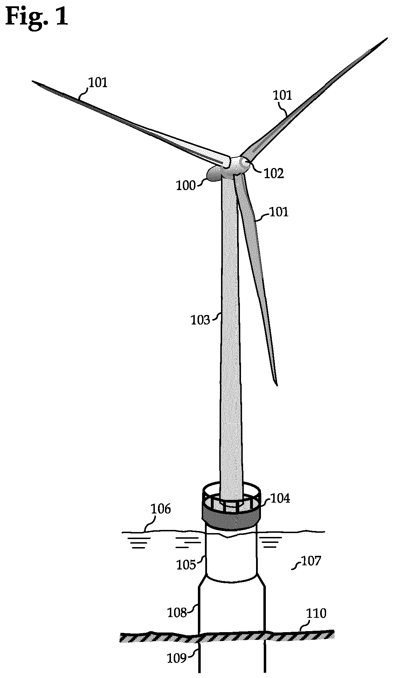

Fig. **1** depicts generally an individual wind turbine out of the many that would compose a wind farm. In the figures, like numerals indicate like or corresponding components throughout. Accordingly, the offshore wind turbine components include the turbine which consists of the nacelle 100, the rotor with the blades 101, and the hub 102. The rotor is connected through a drive train to the generator which is housed in the nacelle. Various sensors and control actuators such as for pitch and yaw controls (not shown) may be included in the nacelle and hub. The nacelle, blades and hub are mounted at the top of the tower 103, which incorporates a platform 104, connected to a transition piece 105. The platform is disposed sufficiently above the sea surface 106, but part of the transition piece 105 is typically below the sea surface and in the water 107. The transition piece connects to the foundation structure, a type of which is the monopile 108 illustrated in the figure. A sufficient in length segment of the monopile 109 is embedded into the sea bed 110 to provide a secure foundation.

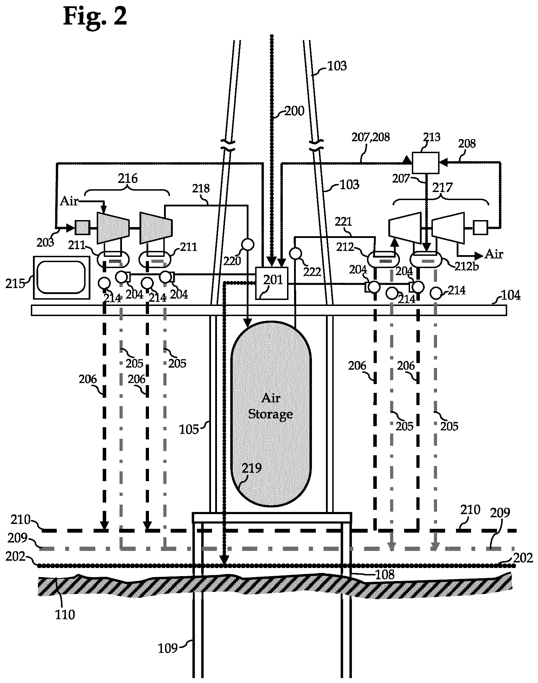

Referring to Fig. 2, the power generated by the turbine is transmitted by cable 200, to the turbine transformer or power control unit 201. The turbine power control unit typically steps up the voltage of the generated power and connects it to the inner-array electric power cable 202, which enters and exits the foundation near the mud line. Under the present embodiment of the invention, the turbine power control unit functions also include appropriate power supply 203 to the compressor; appropriate power supply to local pump/flow controls 204 in that turbine's branch cooling circuit 205 and branch heating circuit 206; appropriate power supply 207, if necessary, to the reheaters 212b, and reception and conditioning of generated-from-storage power 208. Because the cooling circuit 209 and heating circuit 210 lines are under their operating pressures, the local pump/flow controls are needed to circulate cool fluid from the cooling circuit through the compressor after cooler, if any (not shown) and the intercoolers 211, and regulate the flows; and to circulate hot fluid from the heating circuit through any preheater 212 and reheaters 212b, and regulate the flows. The cooled fluid exiting any preheater 212 and reheaters 211b enter the cooling circuit 209, while the heated fluid exiting the intercoolers 211 enter the heating circuit 210. The power circuits may include additional sub-control units such as 213. The branch thermal circuits may also include necessary additional flow controls such as check valves, et cetera, illustrated generally in Fig. **2** by the devices 214.

Fig. **2** also illustrates generally the distributed or local system control system 215, the compressor train 216, and the expander/generator train 217. All these units 215-217, flow devices 204, 214, power controls 201,213, and associated structures and accessories are contained on a platform 104 which may be the same or separate from the general work platform 104 indicated in Fig. **1**. Compressed air 218 leaving the compressor train 216, enter the air storage tank 219 through a complement of flow and pressure control devices 220. Compressed air supply 221 to the expander/generator train 217, exit the air storage 219 through a complement of flow and pressure control devices 222. Fig. **2** also shows the air storage tank 219 fully contained in the transition piece 105. However, depending on its size, operating pressure, and material of construction, the air storage may be contained in one or more of the support elements, that is, the monopile or foundation piece 109, the transition piece 105 and the tower 103. For example at a storage pressure of about 80 bar and depending on the turbine inlet pressure regulation adopted, roughly 2500 m³ of storage volume may be needed to produce 20 MWh of energy, assuming adiabatic compression. This volume can be accommodated within approximately 60 m length of a 7.3 m internal diameter cylindrical storage vessel (excluding internal structural elements).

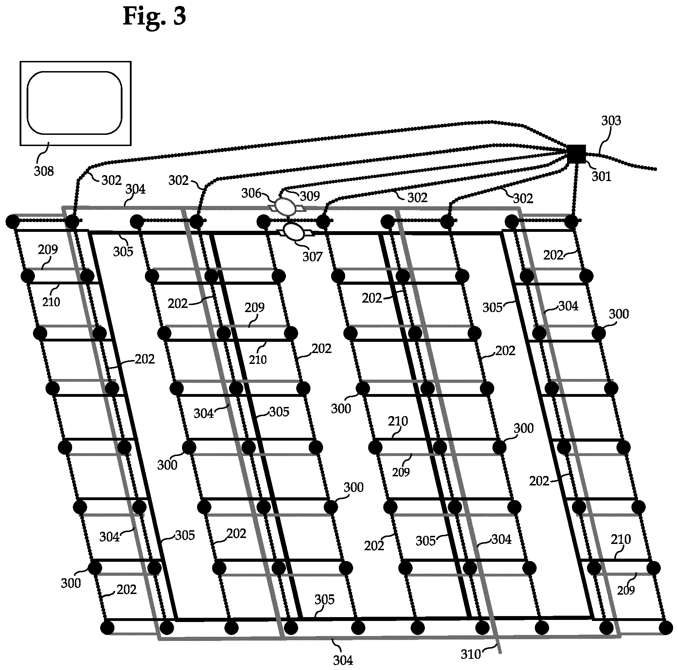

Referring to Fig. **3**, an illustrative distribution of wind turbine units 300 is shown. It is understood that offshore wind farm layouts vary in pattern and number of turbine units constituting the farm. The turbine units are linked in strings by inner-array cables 202, previously described. The strings link to the farm substation or switch yard 301 via the outer-array cables 302, and power leaves the wind farm or connects to the onshore transmission system via the export cable 303. Typically the farm power cables are buried or covered on the sea floor. As shown in Fig. **3**, the thermal energy interchange network of cooling circuits 209 and heating circuits 210 may also be deployed on the sea floor, so that certain physical attributes and installation of the heat interchange network may be akin to the layout and deployment of the power cable network. However the detailed pattern of the thermal network, which is optimized for fluid power losses, could be different from the illustration in Fig. **3** but is still constrained by the wind farm layout and the number of wind turbine units. The thermal energy networks illustrated in Fig. **3** incorporate circuit headers 304 and 305, which respectively, distribute the cool and hot fluids to the cooling and heating circuits, 209 and 210. The flow through the cooling and heating headers and pressure and thermal mixing in the cooling and heating circuits are maintained by pumping stations and associated flow and pressure control devices, illustrated generally in Fig. **3** by pumps 306 and 307 respectively. Fig. **3** also illustrates generally, the central or supervisory control systems for the wind farm and distributed compressed air energy storage with heat networks system 308. The thermal energy network drives 306 and 307, are centrally powered 309, and centrally controlled in the control systems 308. The thermal circuits are closed loops, with possible occasional make-up of fluid 310, in the cool fluid loop. The circulating fluids could be sea water, given the environment of the offshore wind intermittent power resource embodied in this description, however such application is not to be considered in any way limiting to this invention.

### INDUSTRIAL APPLICABILITY

The exploitation of the invention by industry is obvious from the nature of the invention and the description here-in of a preferred embodiment. However, separate considerations may apply for new wind farms and existing wind farms. For a new wind farm, the design of the wind turbine tower and support would consider the air storage high pressure tank 219, if it is to be incorporated within the tower and support structure. Similarly the expanded utility of the tower platform 104 would be taken into account in its design. For existing wind farms, the air storage tank 219, and the compressor 216 and expander/generator 217 trains may be incorporated, if feasible, in the wind turbine tower and support through appropriate retrofits and reinforcements of these structures or otherwise contained in appropriately designed additional offshore structure contiguous with each wind turbine unit. For both new and existing wind farms, the thermal energy interchange network of cooling circuits 209 and heating circuits 210 may be composed of uninsulated and insulated undersea flow pipes and accessories, utilizing established technology for offshore oil/gas production subsea substations and pipeline systems.

The wind farm management and operation control system requires significant changes from conventional wind farm control systems. Ordinarily, this is a hierarchical system of a farm level controller 308, and turbine level controller 215. The turbine level control, in turn, could be in three levels: turbine supervisory control, operational control and subsystem control, which ensure various actuators, yaw drive, pitch drives, the generator, and the power electronics realize and maintain their set points. The typical objective of the farm level controller is control of the farm generated power which may need to track some external power demand; and coordinated control of the power production by individual farm turbines to mitigate variations in wind flow conditions at turbine sites and aerodynamic interactions of the turbines. With typical turbine operations in four regimes: (1) turbine not run - wind speed below cut-in speed, (2) turbine run with speed control - wind speed above cut-in speed but below allowable value for high rotor speed, (3) turbine run under power-limited control for safe electrical and mechanical loads - wind speed above allowable value for high rotor speed but below furling wind speed, and (4) turbine shut down - wind speed at or above furling speed; the turbine supervisory controller typically determines when the turbine is started or stopped and conducts turbine health monitoring tasks, while the turbine operational controller regulates turbine operation in regims 2 and 3. In exploiting the invention, the turbine subsystem controls multiply to include the additional components associated with the compressor and expander/generator trains and the air storage tank; the farm level controller objectives expand to include regulation of flow and energy interchange in the heat network and optimization of thermal efficiency throughout the farm. The "operation" regimes of each turbine station (this includes when turbine is not run or when turbine is shut down) become elaborated, with each regime incorporating combinations of (a) turbine "operation" without compressed air energy storage and compressed air power production, (b) turbine "operation" with compressed air energy storage, and (c) turbine "operation" with compressed air power production. The turbine supervisory controller functions and objectives are accordingly elaborated.

## Claims

1. A method of using compressed air energy storage to improve the capacity factor of distributed wind turbines of a wind farm, comprising :
distributing an air storage (219), compression and expansion to a multiplicity of storage tanks (219) and compressor-expander trains (216, 217) at each wind turbine, providing a thermal energy interchange network linking all the wind turbines with insulated and controlled cooling and heating circuits (209, 210), and
using supervisory farm level controls and distributed turbine level controls (215) which dynamically schedule individual turbine power production and or compressed air energy storage or compressed air power production in concert with wind farm operational objectives and optimization of thermal efficiency and capacity factor for the wind farm.

2. The method of claim 1 ,
**characterized in that**
the wind turbines, the distributed air storage (219), compression and expansion systems, the thermal energy interchange network and a control systems are integrated and function as a system for demand power production at optimal thermal efficiency,
with:
generated power from the wind turbines utilized for farm power including demand power satisfaction, air compression, and driving the cooling and heating circuits (209, 210),
generated power from compressed air is also utilized for farm power,
heat produced during air compression is captured in the heat interchange network, and heat demand during air expansion is met by the heat interchange network.

3. The method of claim 1 ,
**characterized in that**
a hierarchical control system includes in the farm level controls regulation of fluid flow and energy interchange in the heat network and optimization of thermal efficiency in the wind farm; and operational regimes implemented by the turbine level controls are elaborated to encompass combinations of (1) a wind turbine operation, including not run, run during wind speeds above a cut-in speed and below an allowable wind speed for a high rotor speed, run during wind speeds above an allowable wind speed for high rotor speed but below furling wind speed, and turbine shut down for safety considerations), (2) compressed air energy storage, and (3) compressed air power production.

4. A system of compressed air energy storage to improve the capacity factor of distributed wind turbines on a wind farm, comprising :
- a wind farm comprising wind turbines,
- a distributed air storage (219) comprising a multiplicity of storage tanks (219) and compressor-expander trains (216, 217) which are compressable and expandable at each wind turbine,
- a thermal energy interchange network linking all the wind turbines with insulated and controlled cooling and heating circuits (209, 210), and
- supervisory farm level controls and distributed turbine level controls (215) which are adapted to dynamically schedule individual turbine power production and or compressed air energy storage or compressed air power production in concert with wind farm operational objectives and optimization of thermal efficiency and capacity factor for the wind farm.

5. The system of claim 4, **characterized in that**
the wind turbines, the distributed air storage (219), compression and expansion systems, the thermal energy interchange network and a control systems are integrated and function as a system for demand power production at optimal thermal efficiency, with:
generated power from the wind turbines utilized for farm power including demand power satisfaction, air compression, and driving the cooling and heating circuits (209, 210) generated power from compressed air is also utilized for farm power,
heat produced during air compression is captured in the heat interchange network, and heat demand during air expansion is met by the heat interchange network.

6. The system of claim 4, **characterized in that**
a hierarchical control system includes in the farm level controls regulation of fluid flow and energy interchange in the heat network and optimization of thermal efficiency in the wind farm; and operational regimes implemented by the turbine level controls are elaborated to encompass combinations of (1) a wind turbine operation, including not run, run during wind speeds above a cut-in speed and below an allowable wind speed for a high rotor speed, run during wind speeds above an allowable wind speed for high rotor speed but below furling wind speed, and turbine shut down for safety considerations, (2) compressed air energy storage, and (3) compressed air power production.

7. The system of claim 5, **characterized in that**
the air storage, compression and expansion, comprising of the air storage tank (219), compressor train (217) and expander/generator train (216), with their accessories, including after coolers, intercoolers, preheaters, and reheaters, flow devices, power electronics and control systems, being or not being incorporated within a turbine tower (103) and support structures such as a platform (104), a transition piece and foundation piece.

8. The system of claim 5, **characterized in that**
the heat interchange network is comprised of a network of uninsulated and insulated pipes on the sea bed or covered or buried in the sea floor, and linking the compressed air compressor intercoolers and after coolers and the compressed air expander preheaters and reheaters to constitute heating and cooling circuits (209, 210), with the necessary complement headers, pumping stations, flow and pressure control devices.

9. The system of claim 5, **characterized in that**
the wind turbines are linked by a network of inner-array electric power cables (202) on the sea bed or covered or buried in the sea floor, and linking each wind turbine through its power control unit; a set of outer-array cables (302); a wind farm substation or switch yard; and controls and accessories to gather and transmit externally power generated by the wind farm.

## Patentansprüche

1. Verfahren zur Verwendung eines Speichers von aus Druckluft gewonnener Energie zur Verbesserung des Kapazitätsfaktors von verteilten Windturbinen einer Windfarm,
**gekennzeichnet durch** folgende Schritte:
- Ein Luftspeicher (219) wird verteilt,
- Kompression und Expansion einer Vielfalt von Speichertanks (219) und Kompressor-Expander-Züge (216, 217) werden an jeder Windturbine vorgesehen,
- ein Wärmeenergie-Tauscher-Netzwerk wird vorgesehen, das alle Windturbinen mit isolierten und gesteuerten Schaltungen (209, 210) für Kühlung und Heizung verbindet,
- Überwachungs-Farmpegel-Steuerungen und verteilte TurbinenpegelSteuerungen (215) werden verwendet, die dynamisch eine individuelle Turbinenleistungserzeugung und/oder eine Druckluftenergiespeicherung oder Druckluft-Leistungserzeugung in Verbindung mit den Windfarm-Betriebsmöglichkeiten und der Optimierung des Wärmewirkungsgrads und des Kapazitätsfaktors für die Windfarm vornehmen.

2. Verfahren nach Anspruch 1,
**dadurch gekennzeichnet,**
**dass** die Windturbinen, der verteilte Luftspeicher (219), die Kompressions- und Expansionssysteme, das Wärmeenergie-Tauscher-Netzwerk und die Steuersysteme hinsichtlich der Integrierung und Funktion als System zur Aufforderung zur Leistungserzeugung bei optimaler thermischer Wirksamkeit ausgebildet sind, wobei
- die Leistung von den Windturbinen für die Farmleistung einschließlich der Erfüllung der Forderung nach der Leistung, der Luftkompression und des Betriebs der Kühl- und Heizschaltungen (209, 210) erzeugt wird,
- und wobei die erzeugte Leistung aus der Druckluft auch für die Farmleistung verwendet wird, wobei die während der Luftkompression erzeugte Wärme im Wärmeenergie-Tauscher-Netzwerk aufgenommen wird.

3. Verfahren nach Anspruch 1
**dadurch gekennzeichnet,**
**dass** ein hierarchisches Steuersystem vorgesehen ist, das in den Farmpegel-steuerungen eine Regelung des Flüssigkeitsflusses und einen Energieaustausch im Wärmenetzwerk sowie eine Optimierung des thermischen Wirkungsgrads in der Windfarm vornimmt,
**dass** Betriebsregelungen durch die Turbinenpegelsteuerungen ausgebildet sind, die dazu dienen, Kombinationen (1) einer Windturbinen-Operation zu umfassen, die nicht den Lauf, den Lauf während der Windgeschwindigkeit über einer Cut-in-Geschwindigkeit und unter einer erlaubten Windgeschwindigkeit für eine hohe Rotorgeschwindigkeit und den Lauf während Geschwindigkeiten über einer erlaubten Windgeschwindigkeit für eine hohe Rotorgeschwindigkeit, aber unter einer Roll-Windgeschwindigkeit beinhalten,
und **dass** (1) eine Turbinenabschaltung aus Sicherheitsgründen, (2) eine Speicherung der Druckluftenergie und (3) eine Leistungserzeugung aus Druckluft vorgesehen sind.

4. System zur Speicherung von Energie aus Druckluft zur Verbesserung des Kapazitätsfaktors von verteilten Windturbinen auf einer Windfarm mit
- einer Windfarm, die Windturbinen aufweist,
- einem verteilten Luftspeicher (219), der eine Vielfalt von Speichertanks (219) und Kompressions-Expansions-Zügen (216, 217) aufweist, die zusammendrückbar und expandierbar an jeder Windturbine sind,
- einem Wärmeenergie-Tauscher-Netzwerk, das alle Windturbinen mit isolierten und gesteuerten Kühl- und Heizschaltungen (209, 210) verbindet, und
- Überwachungs-Farmpegel-Steuerungen und verteilten TurbinenpegelSteuerungen (215), die zugefügt sind, um dynamisch die individuelle Turbinenleistungserzeugung und/oder die Energiespeicherung aus der Druckluft oder die Erzeugung von Leistung aus Druckluft in Verbindung mit den Windfarm-Betriebsmöglichkeiten und eine Optimierung des thermischen Wirkungsgrads und des Kapazitätsfaktors für die Windfarm zu planen.

5. System nach Anspruch 4,
**dadurch gekennzeichnet,**
**dass** die Windturbinen, der verteilte Luftspeicher (219), die Kompressions- und Expansionssysteme, das thermische Energie-Tauscher-Netzwerk und eines der Steuersysteme integriert sind und als System zur Forderung nach Leistungserzeugung bei optimalem thermischen Wirkungsgrad ausgebildet sind,
wobei
- die aus den Windturbinen gewonnene Leistung, die für die Farmleistung genutzt wird, die Forderung nach Erfüllung der Leistung, die Luftkompression und den Betrieb der Kühl- und Heizschaltungen (209, 210) einschließt, und
- die aus der Druckluft erzeugte Leistung auch für die Farmleistung verwendet wird und wobei die während der Luftkompression erzeugte Wärme im Wärme-Tauscher-Netzwerk aufgenommen wird sowie die Wärmeforderung während der Luftexpansion durch das Wärme-Tauscher-Netzwerk wahrgenommen wird.

6. System nach Anspruch 4,
**dadurch gekennzeichnet,**
**dass** ein hierarchisches Steuersystem vorgesehen ist, das in den Farmpegel-Steuerungen eine Regelung des Flüssigkeitsflusses und einen Energietausch im Heiznetzwerk sowie eine Optimierung des thermischen Wirkungsgrads in der Windfarm vorsieht,
**dass** Operationsregelungen, die durch die Turbinenpegelsteuerungen vorgenommen werden, derart ausgebildet sind, dass sie Kombinationen (1) einer Windturbinenoperation, die nicht den Lauf, den Lauf während der Windgeschwindigkeit über einer Cut-in-Geschwindigkeit und unter einer erlaubten Windgeschwindigkeit für eine hohe Rotorgeschwindigkeit und den Lauf während Geschwindigkeiten über einer erlaubten Windgeschwindigkeit für eine hohe Rotorgeschwindigkeit, aber unter einer Roll-Windgeschwindigkeit beinhalten,
und **dass** (1) eine Turbinenabschaltung aus Sicherheitsgründen, (2) eine Speicherung der Druckluftenergie und (3) eine Leistungserzeugung aus Druckluft vorgesehen sind.

7. System nach Anspruch 5,
**dadurch gekennzeichnet,**
**dass** der Luftspeicher, die Kompression und die Expansion, die sich auf die Luftspeichertanks (219), den Kompressorzug (217) und den Expander-Generator-Zug (216) mit ihrem Zubehör beziehen, nach den Kühlern Zwischenkühler, Vorheizer und Wiederaufheizer, Flussvorrichtungen, Leistungselektronik-Vorrichtungen sowie Steuersysteme aufweisen, die in einem Turbinenturm (103) untergebracht oder auch nicht untergebracht sind,
und **dass** Stützstrukturen vorgesehen sind, wie beispielsweise eine Plattform (104), ein Übergangsstück und ein Gründungsstück.

8. System nach Anspruch 5,
**dadurch gekennzeichnet,**
**dass** das Wärmetauschernetzwerk aus einem Netzwerk von nicht isolierten und isolierten Leitungen auf dem Meeresboden besteht, die dort eingedeckt sind oder vom Meeresboden getragen werden und die die Zwischenkühler des Druckluftkompressors und die Nachkühler sowohl als auch die Druckluftexpandervorheizungen und Wiederaufheizungen verbinden, um Heiz- und Kühlschaltungen (209, 210) mit den notwendigen Dateiköpfen, Pumpstationen, Fluss- und Drucksteuervorrichtungen zu bilden.

9. System nach Anspruch 5,
**dadurch gekennzeichnet,**
**dass** die Windturbinen durch ein Netzwerk von innen angeordneten elektrischen Stromversorgungskabeln (202) verbunden sind, die dort eingedeckt sind oder vom Meeresboden getragen werden und die dort jede Windturbine durch ihre Stromversorgungssteuereinheit verbinden,
und **dass** ein Satz von außen angeordneten Kabeln (302), eine Windfarm-Unterstation oder Schaltstelle sowie Steuer- und Zusatzeinrichtungen vorgesehen sind, die extern die durch die Windfarm erzeugte Leistung einsammeln und übertragen.

## Revendications

1. Dispositif pour l'utilisation d'une mémoire de l'énergie obtenue de l'air comprimé pour l'amélioration du facteur de capacité des turbines éoliennes d'un parc éolien **caractérisé par** les étapes qui suivent:
- Une mémoire d'air (219) est répartie,
- Une compression et une expansion d'une variété de réservoirs de stockage (219) et de trains compresseurs-extenseurs (216, 217) sont prévus au sein de chaque turbine éolienne,
- Un réseau d'énergie thermique-échangeur de la chaleur est prévu reliant toutes les turbines éoliennes par le biais de circuits isolés et commandés (209, 210) pour le refroidissement et le chauffage,
- Des contrôleurs de surveillance du niveau du parc et des contrôleurs répartis du niveau des turbines (215) sont utilisés procédant à titre dynamique à une génération de puissance individuelle des turbines et/ou à un stockage de l'énergie de l'ai comprimé ou à une génération de puissance de l'air comprimé en relation avec les possibilités de fonctionnement et à l'optimisation du grade de l'effet thermique et au facteur de capacité pour le parc éolien.

2. Dispositif selon la revendication 1 est caractérisé de sorte que les turbines éoliennes, la mémoire d'air répartie (219), les systèmes de compression et d'expansion, le réseau d'énergie thermique-échangeur de la chaleur et les systèmes de commande sont formés en ce qui concerne l'intégration et le fonctionnement en qualité de système pour l'appel à la génération de puissance en efficacité optimale thermique où
- la performance des turbines éoliennes pour la performance du parc y inclus pour l'accomplissement de la demande à la performance, la compression de l'air et le fonctionnement des contrôleurs de refroidissement et de chauffage (209, 210) est produite,
- et où la performance produite est utilisable grâce à l'air comprimé pour la performance du parc où la chaleur produite lors de la compression de l'air est intégrée dans le réseau d'énergie thermique-échangeur de la chaleur.

3. Dispositif selon la revendication 1 est caractérisé de sorte qu'un système de commande hiérarchique est prévu procédant dans les contrôleurs du niveau du parc à un réglage du flux du liquide et à un échange d'énergie au niveau du réseau de la chaleur ainsi qu'à une optimisation de l'efficacité thermique dans le parc éolien,
Que des réglages de fonctionnement sont formés à travers les contrôleurs de niveau des turbines servant à entourer les combinaisons (1) de l'opération des turbines éoliennes ne contenant pas la course, la course lors de la vitesse du vent via une vitesse cut-in et sous une vitesse autorisée du vent pour une haute vitesse du rotor et la course pendant les vitesses via une vitesse autorisée du vent pour une haute vitesse du rotor, mais sous une vitesse du vent Roll,
Et que (1) la fermeture de la turbine pour des raisons de sécurité (2), une mémoire de l'énergie de l'air comprimé et (3) une génération de puissance de l'air comprimé sont prévues.

4. Système pour le stockage de l'énergie de l'air comprimé pour l'amélioration du facteur de capacité des turbines éoliennes réparties d'un parc éolien avec
- un parc éolien présentant des turbines éoliennes,
- Une mémoire d'air répartie (219) présentant une variété de réservoirs de stockage (219) et des trains de compression et d'expansion (216,217) qui sont compressibles et expansibles à chaque turbine éolienne,
- Un réseau d'énergie thermique-échangeur de la chaleur reliant toutes les turbines éoliennes par le biais de contrôleurs isolés et commandés de refroidissement et de chauffage (209,210),
- Et des contrôleurs de surveillance du niveau du parc et des contrôleurs répartis du niveau des turbines (215) qui sont incorporés pour planifier à titre dynamique la génération de la puissance individuelle des turbines et/ou le stockage d'énergie de l'air comprimé ou la génération de la puissance de l'air comprimé en relation avec les possibilités de fonctionnement du parc éolien et une optimisation de l'efficacité thermique et du facteur de capacité du parc éolien.

5. Système selon la revendication 4 est caractérisé de sorte que les turbines éoliennes, la mémoire d'air répartie (219), les systèmes de compression et d'expansion, le réseau d'énergie thermique-échangeur de la chaleur et l'un des systèmes de commande sont intégrés et sont formés en qualité de système à l'appel pour la génération de puissance en cas d'efficacité thermique optimal où
- La performance produite par les turbines éoliennes utilisables pour la performance du parc, la demande à l'accomplissement de la performance, la compression de l'air et le fonctionnement des contrôleurs pour le refroidissement et le chauffage (209,210), y inclus et
- que la performance produite par l'air comprimé est utilisée pour la performance du parc et où la chaleur produite lors de la compression de l'air est intégrée dans le réseau d'énergie thermique-échangeur de la chaleur et que l'appel à la chaleur est perçue lors de l'expansion de l'air à travers le réseau d'énergie thermique-échangeur de la chaleur.

6. Système selon la revendication 4 est caractérisé de sorte qu'un système de commande hiérarchique est prévu prévoyant un réglage dans les contrôleurs du niveau du parc du flux du liquide et un échange d'énergie au niveau du réseau du chauffage ainsi qu'une optimisation de l'efficacité thermique dans le parc éolien,
Que les réglages de l'opération effectués à travers les contrôleurs du niveau des turbines sont formés de telle sorte qu'ils contiennent des combinaisons (1) d'une opération de turbines éoliennes non pas de la course, de la course pendant la vitesse du vent via une vitesse cut-in et sous une vitesse autorisée du vent pour une haute vitesse du rotor et la course pendant les vitesses via une vitesse autorisée de vent pour une haute vitesse du rotor, mais sous une vitesse Roll du vent,
Et que (1) la fermeture des turbines pour des raisons de sécurité, (2) un stockage de l'énergie de l'air comprimé et (3) une génération de puissance de l'air comprimé sont prévues.

7. Système selon la revendication 5 est caractérisé de sorte que la mémoire de l'air, la compression et l'expansion se réfèrent au réservoir de stockage de l'air (219), le train compresseur (217) et le train générateur expansible (216) et à leurs accessoires présentent des refroidisseurs, des refroidisseurs intermédiaires, des préchauffeurs et des réchauffeurs, des dispositifs d'écoulement, des dispositifs électroniques de puissance qui sont intégrés ou encore non dans des tours de turbines (103) et que des structures de support sont prévues comme à titre d'exemple une plateforme (104), un raccord de réduction et un raccord de fondement.

8. Système selon la revendication 5 est caractérisé de sorte que le réseau d'énergie thermique-échangeur de la chaleur se compose de conduits non isolés et isolés au fond marin qui sont stockés là bas ou sont portés par le fond marin et qui relient non seulement les refroidisseurs intermédiaires du compresseur de l'air comprimé et les post-refroidisseurs mais aussi les préchauffeurs expansibles de l'air comprimé et les réchauffeurs pour former des contrôleurs de chauffage et de refroidissement (209,210) avec les en-têtes nécessaires, les stations de pompage et les dispositifs de commande de la pression.

9. Système selon la revendication 5 est caractérisé de sorte que les turbines éoliennes sont reliées par le biais d'un réseau de câbles d'alimentation en courant électrique disposés à l'intérieur (202) qui sont stockés là bas ou sont portés par le fond marin reliant là bas chaque turbine éolienne par une unité de commande en alimentation en courant,
Et qu'un ensemble de câbles disposés à l'extérieur (302), une sous-station du parc éolien ou un point de commutation ainsi que des dispositifs de commande et des dispositifs complémentaires sont prévus qui collectent et transfèrent la puissance produite par le parc éolien.
